Europäisches Patentamt

European Patent Office

Office européen des brevets

(19)

(11) Numéro de publication: **0 238 403**
**B1**

(12) # FASCICULE DE BREVET EUROPEEN

(45) Date de publication du fascicule du brevet:
14.03.90

(51) Int. Cl.⁴: **C03B 40/04,** C03B 40/02

(21) Numéro de dépôt: 87400560.6

(22) Date de dépôt: 13.03.87

(54) Procédé de lubrification d'une surface telle qu'un moule pour la fabrication d'un objet en verre.

(30) Priorité: 17.03.86 FR 8603733

(43) Date de publication de la demande:
23.09.87 Bulletin 87/39

(45) Mention de la délivrance du brevet:
14.03.90 Bulletin 90/11

(84) Etats contractants désignés:
AT BE CH DE ES FR GB GR IT LI LU NL SE

(56) Documents cités:
EP-A- 0 022 385
WO-A- 84/02899
DE-C- 86 541
FR-A- 2 570 364
US-A- 4 498 918

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07(FR)**

(72) Inventeur: **Virey, Franck, 14, rue Juge, F-75015 Paris(FR)**

(74) Mandataire: **Vesin, Jacques et al, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07(FR)**

ACTORUM AG

## Description

La présente invention concerne un procédé de lubrification d'une surface telle qu'un moule, un tapis de transfert, etc... pour la fabrication d'un article en verre tel qu'un récipient, dans lequel on dépose périodiquement, sur la surface, une couche de lubrifiant.

Elle se rapporte plus particulièrement à un procédé de lubrification d'une surface, dans lequel on dépose périodiquement sur ladite surface une couche de lubrifiant contenant des particules carbonées créées par craquage d'un hydrocarbure injecté pendant un intervalle de temps déterminé dans la zone chaude créée par une flamme.

La fabrication d'objets en verre, en particulier d'objets en verre creux tels que bouteilles, flacons, etc... est habituellement effectuée selon deux méthodes:

La première méthode dite "soufflé-soufflé", dans laquelle on forme une ébauche par soufflage dans un premier moule, cette ébauche étant ensuite transférée dans un second moule dans lequel elle est soufflée afin de prendre sa forme définitive.

La seconde méthode dite "pressé-soufflé ", dans laquelle on forme une ébauche par pressage dans un moule d'une goutte de verre ou paraison issue d'une trémie, cette ébauche étant ensuite transférée dans un moule de soufflage dans lequel l'ébauche creuse est soufflée afin de prendre sa forme définitive.

Les objets en verre plats sont généralement réalisés par pressage.

Quelle que soit la méthode utilisée, les parois internes des moules dans lesquels sont formées les ébauches sont régulièrement lubrifiées afin de permettre une meilleure pénétration du verre et d'éviter certains défauts de surface de l'ébauche, défauts qui subsistent sur le récipient lorsqu'il est terminé. La technique encore fréquemment utilisée à l'heure actuelle dans les verreries est une technique de lubrification manuelle des moules qui n'est pas sans danger pour les manipulateurs. Cette lubrification est effectuée en général à l'aide d'une huile, contenant du graphite en suspension.

Dans une telle méthode manuelle l'opérateur a tendance à déposer une quantité importante d'huile, afin de réduire la fréquence des lubrifications. Ceci engendre une souillure des premières ébauches réalisées après chaque lubrification, ce qui augmente considérablement les pertes sur la chaîne de fabrication. De plus, il en résulte des fumées importantes dans la zone de travail. On a tenté depuis longtemps de substituer à la lubrification manuelle une lubrification automatique des chaînes de fabrication de récipients en verre, sans grand succès jusqu'à présent.

Le brevet français 1.285.586 décrit un procédé de lubrification automatique d'un moule fermé dans lequel l'appareil de moulage est pourvu de canalisations de lubrification par lesquelles on injecte de l'huile dans le moule avant d'introduire la paraison dans celui-ci. L'introduction d'huile par un procédé manuel ou automatique engendre une pollution locale importante car l'huile rebrûle au contact des moules, dégageant une épaisse fumée noire chargée d'hydrocarbures polyaromatiques.Or cette pollution se retrouve au niveau des articles en verre, ceux-ci étant revêtus de résidus de combustion incomplète de l'huile, résidus qui ne rebrûlent pas à l'air, malgré la température élevée à laquelle l'ébauche sort du moule, ce qui interdit en pratique la lubrification avant chaque introduction d'une paraison. Si l'on ne réalise pas cette lubrification avant chaque introduction, on constate une diminution rapide de la pollution mais une augmentation corrélative des défauts de surface de l'article en verre.

Une solution a été proposée dans le brevet américain 4.165.974. consistant à revêtir la surface interne des moules à l'aide d'un fluorure de carbone de manière à réaliser une couche anti-adhérente sur celle-ci. Un tel procédé nécessite de démonter chaque moule, le traiter, puis le soumettre à un traitement thermique avant de le remonter sur machine. Bien que la durée de lubrification annoncée soit de plusieurs heures, un tel procédé nécessite une présence humaine quasi permanente autour de la machine de fabrication, avec l'obligation d'arrêter fréquemment cette machine pour démonter les moules, les lubrifier, les remonter etc..., ce qui entraîne des coûts de fabrication prohibitifs.

Le brevet américain 4.409.010, décrit un procédé de lubrification de moules à l'aide d'une pulvérisation d'huile liquide sur les faces internes des moules, mais la méthode décrite ne permet pas d'éviter les inconvénients relatifs à l'utilisation d'huile pour la lubrification.

Un autre problème se pose également lors de l'utilisation d'un des procédés décrits ci-dessus: lorsque les récipients en verre sortent du moule sans trace de pollution grasse, leur état de surface est généralement médiocre, dépendant bien entendu de la qualité de la surface du moule en acier. Bien que cette qualité soit surveillée, les récipients présentent généralement à la sortie de la chaîne de fabrication un aspect mat du type "peau d'orange" qui n'est pas satisfaisant pour le client. C'est pourquoi la Demanderesse a mis au point un procédé de polissage de la surface d'articles en verre, décrit dans le brevet Européen 136.934, grâce auquel on peut donner un aspect de surface brillant à ces articles. Un tel procédé, particulièrement nécessaire lorsqu'on réalise des récipients de haute qualité, par exemple pour le domaine de la parfumerie, augmente nécessairement les coûts de fabrication et l'on souhaite à l'heure actuelle, pour la fabrication de bouteilles ou de récipients en verre pour lesquels les exigences de qualité de surface sont moins grandes, obtenir directement à la sortie du moule, un récipient dont l'état de surface soit acceptable pour le client.

La Demanderesse a également décrit dans le brevet EP-A 22385, un procédé de production de noir de carbone, dans lequel on réalise le craquage d'un jet d'acétylène dans une flamme aéro ou oxy-combustible. Ce procédé comporte de nombreuses applications; l'une d'elle consiste à déposer une couche de noir de carbone sur les parois d'un moule, cette couche ayant de hautes qualités lubrifiantes et isolantes. Un tel procédé est applicable dans le domaine de la verrerie, en particulier pour l'isolation contre les chocs thermiques et mécaniques, des tapis de transfert des objets en verre sortant de l'appareil de moulage et se dirigeant par exemple, vers la machine de polissage superficiel à la flamme, évoquée ci-dessus. On évite ainsi aux récipients en verre sortant des moules, du fait des propriétés isolantes du dépôt carboné obtenu, des chocs thermique et/ou mécanique néfastes.

On a cependant constaté qu'en utilisant le procédé décrit dans le brevet EP-A 22 385, pour la réalisation de récipients en verre, on obtenait des résultats sensiblement équivalents à ceux obtenus avec les techniques décrites antérieurement: les dépôts de matière carbonée permettent généralement une bonne lubrification, mais présentent l'inconvénient d'encrasser rapidement les moules et de provoquer des dépôts gras à la surface de l'article en verre, comme dans le cas d'utilisation d'huile. On n'avait pas constaté d'amélioration de l'état de surface du récipient à la sortie du moule par rapport aux procédés de graissage des empreintes du moule. On avait par contre, constaté, ainsi que cela est décrit dans le brevet français 2 570 364, que l'utilisation du procédé objet du brevet EP-A 22 385, permettait de lubrifier correctement les moules d'ébauche pendant leur temps normal d'ouverture, évitant tout collage de la paraison aux parois du moule.

De manière totalement inattendue, le procédé selon l'invention permet en particulier lors de la lubrification des moules d'obtenir un dépôt carboné donnant une qualité de peau du verre très nettement supérieure à celle des procédés connus, ne nécessitant pas nécessairement de traitement de surface du récipient à sa sortie du moule. Le procédé selon l'invention est caractérise en ce que cette couche de lubrifiant est réalisée à l'aide d'une flamme, de température supérieure à 2000°K, dans la zone chaude de laquelle on injecte un hydrocarbure gazeux ou un mélange d'hydrocarbures gazeux comprenant au moins 15% d'un constituant dont le rapport du nombre d'atomes de carbone au nombre d'atomes d'hydrogène C/H est supérieur à 0,75, en ce que la flamme est formée par combustion d'un mélange d'hydrocarbure et d'oxygène et en ce que ladite flamme a un facteur d'oxygène supérieur à 1, la vitesse d'injection de l'hydrocarbure dans la zone chaude créée par ladite flamme et la température de celle-ci étant contrôlées de manière à obtenir une couche poreuse de particules carbonées.

La Demanderesse pense, sans pour autant que cette explication limite la portée de son invention, que l'utilisation d'une flamme surstœchiométrie, c'est-à-dire comportant un excès d'oxygène par rapport à la stœchiométrique, permet d'éviter le craquage du combustible responsable de la présence de particules grasses. De plus, le réglage du facteur d'oxygène, c'est-à-dire le rapport de la quantité en volume, d'oxygène dans la flamme utilisée et dans la flamme stœchiométrique dans les conditions normales de température et de pression, permet d'agir sur la température de la flamme, celle-ci ayant tendance à diminuer lorsque le facteur d'oxygène augmente. Dans tous les cas, il faut donc veiller à ce que la température de la flamme reste supérieure à 2000°K et de préférence supérieure à 2500°K. Le dépôt carboné obtenu est ainsi une couche poreuse qui, après laminage par la paraison dans le moule, est faiblement isolante thermiquement, ce qui permet de refroidir uniformément la peau du récipient en verre, par refroidissement du moule, mais suffisamment isolante thermiquement pour éviter un gradient de température dans le verre qui serait générateur de tensions internes dans les parois du récipients, le rendant ainsi plus fragile. Or, il est connu que la qualité de la peau du récipient obtenu à la sortie du moule influence la résistance à la pression du récipient. Ce paramètre est très important pour les récipients contenant en particulier des boissons gazeuses. Le procédé selon l'invention permet, par l'amélioration de la qualité de la peau du récipient diretement issu du moule, d'augmenter la résistance à la pression du récipient d'environ 25 %, et même au-delà, ce qui est considérable. Dans certaines applications, ceci permet par exemple de diminuer l'épaisseur de la paroi de verre, à résistance égale.

Le dépôt carboné obtenu possède également une caractéristique très importante en pratique puisqu'on constate qu'il rebrûle à l'air lorsqu'il s'est déposé sur l'ébauche en verre : de cette manière les récipients terminés ne portent pas de traces de pollution ce qui améliore considérablement les rendements de fabrication. De plus les moules peuvent être nettoyés simplement à l'aide d'un chiffon si cela est nécessaire.

Un avantage considérable de l'invention est de permettre l'utilisation de moules n'ayant subi aucun traitement de polissage ou de laquage sur ses faces internes, opérations très coûteuses : les récipients obtenus à partir de tels moules non polis et lubrifiés selon l'invention ont en effet une qualité de peau supérieure à celle de récipients obtenus avec des moules polis ou laqués revêtus d'une couche de lubrifiant selon l'art antérieur.

De plus, ceci conduit généralement à un allongement de la durée de vie des moules.

Comme source de chaleur capable de produire une température supérieure ou égale à 2000°K, on utilisera de préférence une flamme oxyacétylénique. Cependant, toute source de chaleur de température supérieure à 2000°K peut convenir, telle que plasma ...

Compte tenu de la faible durée d'injection de l'hydrocarbure qui, dans le cas de l'acétylène, par exemple, n'excède pas une seconde, aucune goutte de verre n'est déviée du moule pour permettre la lubrification : celle-ci peut se faire entre l'extraction de l'ébauche et la coulée d'une nouvelle goutte de verre.

Parmi les hydrocarbures convenant à la production d'un matériau carboné pulvérulent par craquage thermique on peut choisir seul ou en mélange, l'acétylène, le propyne, le propadiène, le benzène, les mélanges acétylène-éthylène, les mélanges constitués de proyne, propadiène, propylène, et autre hydrocarbures en $C_3$ ou $C_4$ tels que butadiène, butène, propane. Les mélanges contenant au moins 15 % d'acétylène conviennent à la réalisation de l'invention : on peut citer les mélanges acétylène-éthylène en particulier les mélanges vendus sous la marque commerciale "Crylène" contenant environ 20 % en volume d'acétylène et environ 80 % en volume d'éthylène. Les mélanges connus sous la marque commerciale "Tétrène" constitués de propyne, propadiène, propylène, butadiène, butène, propane, à raison de 20 à 25 % en volume de propyne, 15 à 20 % en volume de propadiène, 45 à 60 % en volume de propylène 2 à 5 % en volume de butadiène, 2 à 5 % en volume de butène, 5 à 8 % en volume de propane, peuvent également convenir .

On utilisera de préférence l'acétylène lorsque l'intervalle temps disponible pour la lubrification du moule est inférieur à une seconde environ. D'une manière générale, on pourra procéder à des essais avec différents hydrocarbures pour déterminer si l'intervalle de temps disponible est suffisant pour obtenir une couche ayant de bonnes propriétés. Lorsqu'on utilise des hydrocarbures du type "Crylène" ou "Tétrène", il sera préférable d'avoir une flamme de température supérieure à 2.200° K, et ralentir leur vitesse d'injection par rapport à l'acétylène. L'homme de métier déterminera les conditions optimales par simples manipulations de routine.

Le matériau carboné obtenu sur les parois avant la chute de la paraison dans le moule est constitué d'agrégats de sphérules de très faible diamètre, compris entre 5 et 50 nm, et plus généralement entre 10 et 25 nm. Ces particules sont visiblement désordonnées et ne se rapprochent d'aucune structure connue dans les matériaux carbonés tels que le graphite, etc... On remarque parfois des macrostructures type filaments de longeuer 0,5 à 5 µm, de diamètre 0,1 à 0,5 µm qui apparaissent aléatoirement. L'ensemble forme un dépôt extrémement pulvérulent, de porosité apparente (avant la chute de la paraison) trés grande de 90 à 98 %, préférentiellement de 95 à 98 %. L'épaisseur du film dépend en particulier, de la durée d'injection de l'hydrocarbure et on peut obtenir, sur une surface métallique par exemple, des dépôts de 1 à 50 µm d'épaisseur. Chimiquement, les particules sphériques ont toutes les caractéristiques de suies formées par carbonisation en phase gazeuse. Elles sont donc constituées de carbone solide sur lequel sont plus ou moins adsorbés des hydrocarbures divers, tels que des hydrocarbures polyaromatiques contenant ou non des hétéroatoms -O, H, S... Globalement la fraction pondérale de carbone est supérieure à 0,99.

Selon une variante de l'invention, il est tout à fait possible de lubrifier non pas les parois internes du moule, avant la chute de la paraison dans celui-ci, mais la paraison elle-même avant la chute de celle-ci dans le moule.

Selon une autre variante de l'invention, la surface à lubrifier sera le tapis de transfert de l'objet en verre lorsque celui-ci sort du moule et se dirige vers une autre station de la machine pour y subir une autre étape de fabrication (recuisson, etc...). L'objet en verre étant encore chaud lors de ce transfert (température généralement supérieure à environ 500°C), on constate les mêmes améliorations qu'au niveau du moule, c'est-à-dire l'absence de dépôt gras et le maintien d'un état de surface excellent.

L'invention sera mieux comprise à l'aide des exemples de réalisation ci-aprés :

Exemple 1 : La flamme est réalisée avec un mélange oxygène - gaz naturel dont le facteur d'oxygène est égal è 1, 35. La flamme est dirigée parallèlement à l'axe des moules et la lubrification est réalisée lorsque le moule est fermé, entre l'éjection de l'ébauche précédente et l'introduction d'une nouvelle goutte de verre. La ventilation est coupée pendant la lubrification. Une impulsion d'acétylène a lieu tous les n cycles de fabrication avec 5 < n < 10 ; la durée de chaque impulsion est de 0,8 seconde, le débit correspondant est égal à environ 600 ml, avec une vitesse d'injection de l'acétylène dans la flamme de l'ordre de 240 m/s.

Chaque ébauche réalisée est ensuite soufflée sous forme d'une bouteille. On compare les bouteilles ainsi réalisées à celles obtenues dans les mêmes conditions mais en utilisant de l'huile graphitée pour lubrifier les empreintes du moule, selon la technique habituelle.

On constate, d'une part, une nette amélioration de la qualité de la peau de la bouteille, ce qui se traduit par un aspect beaucoup plus brillant de celle-ci à la sortie du moule, ainsi qu'une augmentation de la résistance à la pression de la bouteille qui est supérieure en moyenne de 25 % (sur un lot de 10 bouteilles) pour les bouteilles obtenues selon le procédé de l'invention.

Exemple 2 : On utilise en mélange oxygène - propane dont le facteur d'oxygène est égal à 1,2. Une impulsion d'acétylène a lieu tous les n cycles de fabrication : avec 5 < n < 10 ; la durée de chaque impulsion est 0, 75 seconde, le débit correspondant est égal à environ 450 ml, la vitesse d'injection de l'acétylène est de l'ordre de 170 m/s. La lubrification est réalisée lorsque le moule est ouvert, selon l'enseignement du brevet français 25 70 364. La ventilation pour le refroidissement des moules est de préférence coupée lors de la lubrification.

On constate les mêmes améliorations que précedemment tant au niveau de la qualité de la peau qu'en ce qui concerne la résistance à la pression.

Exemple 3 : Cet exemple montre l'amélioration obtenue au niveau du tapis de transfert situé en sortie de machine I.S.

On utilise une flamme oxygène-gaz naturel dont le facteur d'oxygène est égal à 1,1. Un rideau de flammes (une flamme tous les 8 mm environ) régulièrement réparties, perpendiculaires au tapis (environ 170 mm au dessus de celui-ci) et sur toute la largeur environ de celui-ci est utilisé, avec un injection d'acétylène par des ouvertures à mi-distance entre les flammes (tous les 8 mm également).

Le tapis à traiter mesure 120 mm de largeur et accomplit un tour en 40 secondes. Il est disposé en entrée d'arche de recuisson et recoit les bouteilles d'un tapis "machine" disposé à 90° tournant légèrement plus vite. Ce tapis de 2 X 7 mètres de longueur, à mailles métalliques, transporte 12000 bouteilles/heure du type "vin de Bordeaux". Il est lubrifié (poteyé) complètement toutes les demi-heures environ. Pour cela, on réalise un débit continu d'environ 1 m³/heure d'acétylène pendant 40 secondes.

Par rapport à un tapis de transfert non poteyé, on constate une nette diminution des chocs thermiques, des micro-abrasions sur le culot de la bouteille, ainsi qu'un meilleur glissement sur les tapis de transfert (meilleur alignement des bouteilles). On note également une amélioration de la tenue en pression des bouteilles. De plus, on note une absence quasi totale de dépôt gras à la surface de la bouteille, ce qui permet d'éviter des rejets en cours de fabrication.

D'une manière générale, l'invention s'applique à la lubrification de toute surface, telle qu'un moule, tapis de transfert, ... destinée à être au contact d'objets en verre, creux au plats, dont la température est encore suffisamment élevée pour provoquer des abrasions, rayures, déformations dans les conditions (en particulier, mécaniques) dans lesquelles l'objet en verre entre en contact avec ladite surface.

## Revendications

1. Procédé de lubrification d'une surface dans lequel on dépose périodiquement sur ladite surface une couche de lubrifiant contenant des particules carbonées crées par craquage d'un hydrocarbure injecté pendant un intervalle de temps déterminé dans la zone chaude créée par une flamme caractérisé en ce que cette couche de lubrifiant est réalisée à l'aide d'une flamme, de température supérieure à 2000°K, dans la zone chaude de laquelle on injecte un hydrocarbure gazeux ou un mélange d'hydrocarbures gazeux comprenant au moins 15% d'un constituant dont le rapport du nombre d'atomes de carbone au nombre d'atomes d'hydrogène C/H est supérieur à 0,75, en ce que la flamme est formée par combustion d'un mélange d'hydrocarbure et d'oxygène et en ce que ladite flamme a un facteur d'oxygène supérieur à 1, la vitesse d'injection de l'hydrocarbure dans la zône chaude créée par ladite flamme et la température de celle-ci étant contrôlées de manière à obtenir une couche poreuse de particules carbonées.

2. Procédé de lubrification d'une surface selon la revendication 1, caractérisé en ce que la température de ladite flamme est supérieure à 2500°K.

3. Procédé de lubrification d'une surface selon l'une des revendications 1 ou 2, caractérisé en ce que le facteur d'oxygène dudit mélange est compris entre 1,1 et 1,4 de préférence entre 1,2 et 1,35.

4. Procédé de lubrification d'une surface selon l'une des revendications 1 à 3, caractérisé en ce que l'hydrocarbure ou le mélange d'hydrocarbures gazeux contient au moins 15% d'un constituant dont le rapport du nombre d'atomes de carbone au nombre d'atomes d'hydrogène C/H est au moins égal à un.

5. Procédé de lubrification d'une surface selon l'une des revendications 1 à 4, caractérisé en ce que l'hydrocarbure injecté dans la zone chaude de la flamme est choisi, seul ou en mélange, parmi l'acétylène, le propyne, le propadiène, le benzène, les mélanges acétylène-éthylène, les mélanges constitués de propyne-propadiène-propylène et autres hydrocarbures en $C_3$ ou $C_4$ tels que propane, butène, butadiène.

6. Procédé de lubrification d'une surface selon l'une des revendications 1 à 5, dans lequel l'hydrocarbure injecté dans la zone chaude de la flamme est un mélange acétylène-éthylène, à raison d'environ 20% en volume d'acétylène et 80% en volume d'éthylène, caractérisé en ce que la température de la flamme est supérieure à 2.200°K, de préférence supérieure à 2500°K.

7. Procédé de lubrification d'une surface selon l'une des revendications 1 à 6, caractérisé en ce que la quantité d'hydrocarbure injectée au cours d'une impulsion est comprise entre 0,4 et 0,8 litre dans les conditions normales de température et de pression.

8. Procédé de lubrification d'une surface selon l'une des revendications 1 à 7, caractérisé en ce que la porosité apparente de la couche de particules de carbone avant la chute de la paraison dans le moule est comprise entre 90% et 98% environ, de préférence 95% et 98%.

9. Procédé de lubrification d'une surface selon l'une des revendications 1 à 8, caractérisé en ce que la couche poreuse de particules de carbone est formée d'agrégats de sphérules de diamètre compris entre 5 et 50 nanomètres et/ou de macrostructures du type filament de longueur comprise entre 0,5 et 5 μm et de diamètre variant entre 0,1 et 0,5 μm.

10. Procédé de lubrification d'une surface selon l'une des revendications 1 à 9 caractérisé en ce que la vitesse d'injection de l'hydrocarbure ou du mélange d'hydrocarbures gazeux est de l'ordre de 170 m/s à 240 m/s.

11. Procédé de lubrification d'une surface selon l'une des revendications 1 à 10, caractérisé en ce que ladite surface est un moule pour la fabrication d'un objet en verre.

12. Procédé de lubrification d'une surface selon l'une des revendications 1 à 10, caractérisé en ce que ladite surface est un tapis de transfert.

13. Procédé de lubrification d'une surface selon la revendication 12, caractérisé en ce que le tapis de transfert est lubrifié à l'aide d'une pluralité de flammes entre lesquelles on injecte l'hydrocarbure ou le mélange d'hydrocarbures gazeux.

14. Procédé selon la revendication précédente, caractérisé en ce que les flammes forment un rideau, sont régulièrement réparties et sont orientées perpendiculairement audit tapis.

15. Procédé de fabrication d'objets par moulage, et notamment d'objets en verre, lesdits objets étant ensuite déposés sur un tapis de transfert, caractérisé en ce que les moules et/ou le tapis de transfert sont lubrifiés à l'aide du procédé selon l'une des revendications 1 à 14.

16. Utilisation du procédé selon l'une des revendications précédentes pour la lubrication de moules et de tapis de transfert dans une unité de fabrication d'objets en verre.

## Claims

1. A method of lubricating a surface in which there is periodically deposited on the said surface a layer of lubricant containing carbonaceous particles produce by the cracking of a hydrocarbon injected during a pecific time interval into the hot zone generated by a flame, characterised in that this layer of lubricant is produced with the aid of a flame of a temperature higher than 2,000°K, into the hot zone of which is injected a gaseous hydrocarbon or a mixture of gaseous hydrocarbons comprising at least 15% of a constituent of which the ratio C/H of the number of carbon atoms to the number of hydrogen atoms is higher than 0.75, in that the flame is produced by combustion of a mixture of hydrocarbon and oxygen and in that the said flame has an oxygen factor greater than 1, the speed of injection of the hydrocarbon into the hot zone generated by the said flame and the temperature of the latter being controlled in such a way as to obtain a porous layer of carbonaceous particles.

2. A method of lucribating a surface according to claim 1, characterised in that the temperature of the said flame is higher than 2500°K.

3. A method of lubricating a surface according to one of claims 1 or 2, characterised in that the oxygen factor of the said mixture is comprised between 1.1 and 1.4, preferably between 1.2 and 1.35.

4. A method of lubricating a surface according to one of claims 1 to 3, characterised in that the gaseous hydrocarbon or mixture of hydrocarbons contains at least 15% of a constituent of which the ratio C/H of the number of atoms of carbon to the number of atoms of hydrogen is at least equal to 1.

5. A method of lubricating a surface according to one of claims 1 to 4, characterised in that the hydrocarbon injected into the hot zone of the flame is selected by itself or in a mixture, from acetylene, propyne, propadiene, benzene, acetylene-ethylene mixtures made up from propyne-propadiene-propylene and other $C_3$ or $C_4$ hydrocarbons such as propane, butene, butadiene.

6. A method of lubricating a surface according to one of claims 1 to 5, in which the hydrocarbon injected into the hot zone of the flame is an acetylene-ethylene mixture at a ratio of approximately 20% by volume of acetylene and 80% by volume of ethylene, characterised in that the temperature of the flame is higher than 2,200°K, preferably higher than 2,500°K.

7. A method of lubricating a surface according to one of claims 1 to 6, characterised in that the quantity of hydrocarbon injected during a pulse is comprised between 0.4 and 0.8 litre under normal temperature and pressure conditions.

8. A method of lubricating a surface according to one of claims 1 to 7, characterised in that the apparent porosity of the layer of particles prior to the dropping of the parison into the mould is comprised between approximately 90% and 98%, preferably between 95% and 98%.

9. A method of lubricating a surface according to one of claims 1 to 8, characterised in that the porous layer of particles of carbon is formed by aggregations of spherules of a diameter comprised between 5 and 50 nanometers and/or by macrostructures of the filament type, of a length comprised between 0.5 and 5 μm and a diameter varying between 0.1 and 0.5 μm.

10. A method of lubricating a surface according to one of claims 1 to 9, characterised in that the speed of injection of the gaseous hydrocarbon or of the mixture of hydrocarbons is of the order of 170 m/s to 240 m/s.

11. A method of lubricating a surface according to one of claims 1 to 10, characterised in that the said surface is a mould for the production of a glass object.

12. A method of lubricating a surface according to one of claims 1 to 10, characterised in that the said surface is a transfer mat.

13. A method of lubricating a surface according to claim 12, characterised in that the transfer mat is lubricated with the aid of a plurality of flames between which is injected the gaseous hydrocarbon or the mixture of gaseous hydrocarbons.

14. A method according to the preceding claim, characterised in that the flames form a curtain, are evenly distributed and are directed perpendicularly to the said mat.

15. A method for the production of objects by moulding, and in particular of glass objects, the said objects thereupon being placed on a transfer mat, characterised in that the moulds and/or the transfer mat are lubricated by means of the method according to claims 1 to 14.

16. Use of the method according to one of the preceding claims for the lubrication of moulds and of transfer mats in a production unit for glass objects.

**Patentansprüche**

1. Verfahren zum Schmieren einer Oberfläche, bei dem man auf dieser Oberfläche periodisch eine Schmiermittelschicht niederschlägt, die karbonisierte Partikel enthält, die durch Cracken eines Kohlenwasserstoffs erzeugt sind, der während eines vorgegebenen Zeitintervalls in eine durch eine Flamme erzeugte heiße Zone injiziert wird, dadurch gekennzeichnet, daß diese Schmiermittelschicht mit Hilfe einer Flamme mit einer Temperatur von mehr als 2000°K erzeugt wird, in deren heiße Zone man einen gasförmigen Kohlenwasserstoff injiziert oder ein Gemisch aus gasförmigen Kohlenwasserstoffen, das wenigstens 15% eines Bestandteils enthält, dessen Verhältnis C/H der Anzahl der Kohlenstoffatome zu der Anzahl der Wasserstoffatome größer als 0,75 ist, daß die Flamme durch Verbrennung eines Gemisches aus Kohlenwasserstoff und Sauerstoff gebildet wird, und daß die Flamme einen Sauerstoffaktor größer 1 hat, wobei die Injektionsgeschwindigkeit des Kohlenwasserstoffs in die durch die Flamme erzeugte heiße Zone und deren Temperatur derart gesteuert werden, daß man eine poröse Schicht aus Kohlenstoffpartikeln erhält.

2. Verfahren zum Schmieren einer Oberfläche, nach Anspruch 1, dadurch gekennzeichnet, daß die Temperatur der Flamme über 2500°K liegt.

3. Verfahren zum Schmieren einer Oberfläche, nach Anspruch 1 oder 2, dadurch gekennzeichnet, daß der Sauerstoffaktor des Gemisches zwischen 1,1 und 1,4, vorzugsweise zwischen 1,2 und 1,35, liegt.

4. Verfahren zum Schmieren einer Oberfläche nach einem der Ansprüche 1 bis 3, dadurch gekennzeichnet, daß der gasförmige Kohlenwasserstoff oder das Gemisch gasförmiger Kohlenwasserstoffe mindestens 15% eines Bestandteils enthält, dessen Verhältnis C/H der Anzahl der Kohlenstoffatome zur Anzahl der Wasserstoffatome mindestens gleich Eins ist.

5. Verfahren zum Schmieren einer Oberfläche nach einem der Ansprüche 1 bis 4, dadurch gekennzeichnet, daß der in die heiße Zone der Flamme injizierte Kohlenwasserstoff allein oder als Gemisch ausgewählt ist aus Azethylen, Propyn, Propadien, Benzen, den Azethylen/Äthylen-Gemischen, den aus Propyn-Propadien-Propylen u.a. $C_3$- oder $C_4$-Kohlenwasserstoffen wie Propan, Butan, Butadien.

6. Verfahren zum Schmieren einer Oberfläche nach einem der Ansprüche 1 bis 5, wobei der in die heiße Zone injizierte Kohlenwasserstoff ein Azethylen/Äthylen-Gemisch mit etwa 20 Vol.% Azethylen und 80 Vol.% Äthylen ist, dadurch gekennzeichnet, daß die Flammentemperatur über 2200°K, vorzugsweise über 2500°K, liegt.

7. Verfahren zum Schmieren einer Oberfläche nach einem der Ansprüche 1 bis 6, dadurch gekennzeichnet, daß die während eines Impulses injizierte Kohlenwasserstoffmenge zwischen 0,4 und 0,8 Liter, bezogen auf normale Temperatur- und Druckbedingungen, beträgt.

8. Verfahren zum Schmieren einer Oberfläche nach einem der Ansprüche 1 bis 7, dadurch gekennzeichnet, daß die scheinbare Porösität der Kohlenstoffpartikelschicht vor dem Einfallen der Külbels in die Form zwischen ca. 90 und 98%, vorzugsweise zwischen 95 und 98%, liegt.

9. Verfahren zum Schmieren einer Oberfläche nach einem der Ansprüche 1 bis 8, dadurch gekennzeichnet, daß die poröse Schicht aus Kohlenstoffpartikeln aus Haufen von Kügelchen mit einem Durchmesser zwischen 5 und 50 nm und/oder Makrostrukturen fadenförmigen Typs mit einer Länge zwischen 0,5 µm und 5 µm und einem zwischen 0,1 und 0,5 µm schwankenden Durchmesser besteht.

10. Verfahren zum Schmieren einer Oberfläche nach einem der Ansprüche 1 bis 9, dadurch gekennzeichnet, daß die Injektionsgeschwindigkeit des Kohlenwasserstoffs oder des gasförmigen Kohlenwasserstoffgemisches in der Gegend von 170 bis 240 m/s liegt.

11. Verfahren zum Schmieren einer Oberfläche, nach einem der Ansprüche 1 bis 10, dadurch gekennzeichnet, daß die Oberfläche eine Form zur Herstellung eines Glasgegenstandes ist.

12. Verfahren zum Schmieren einer Oberfläche, nach einem der Ansprüche 1 bis 10, dadurch gekennzeichnet, daß die Oberfläche ein Förderer ist.

13. Verfahren nach Anspruch 12, dadurch gekennzeichnet, daß der Förderer mittels einer Vielzahl von Flammen, zwischen die der gasförmige Kohlenwasserstoff oder das gasförmige Kohlenwasserstoffgemisch injiziert wird, geschmiert wird.

14. Verfahren nach dem vorhergehenden Anspruch, dadurch gekennzeichnet, daß die einen Vorhang bildenden Flammen gleichmäßig verteilt und rechtwinklig zu dem Förderer gerichtet sind.

15. Verfahren zur Herstellung von Gegenständen, insbesondere Glasgegenständen durch Formen, welche Gegenstände anschließend auf einen Förderer abgelegt werden, dadurch gekennzeichnet, daß die Formen und/oder der Förderer mit Hilfe des Verfahrens nach einem der Ansprüche 1 bis 14 geschmiert wird.

16. Verwendung des Verfahrens nach einem der vorhergehenden Ansprüche zum Schmieren von Formen und Förderern in einer Fabrikationsanlage für Glasgegenstände.